Europäisches Patentamt

European Patent Office

Office européen des brevets

(19)

(11) Numéro de publication: **0 185 594**
**B1**

(12) **FASCICULE DE BREVET EUROPEEN**

(45) Date de publication du fascicule du brevet: **08.08.90**

(51) Int. Cl.⁵: **G 05 D 13/62**

(21) Numéro de dépôt: **85402548.3**

(22) Date de dépôt: **19.12.85**

(54) **Embrayage mixte à friction et courants de Foucault et son procédé de commande.**

(30) Priorité: **18.12.84 FR 8419334**
**21.06.85 FR 8509462**

(43) Date de publication de la demande:
**25.06.86 Bulletin 86/26**

(45) Mention de la délivrance du brevet:
**08.08.90 Bulletin 90/32**

(84) Etats contractants désignés:
**BE DE GB IT**

(56) Documents cités:
**DE-A-2 402 743**
**DE-A-2 920 620**
**DE-A-3 232 849**
**FR-A-2 413 485**
**GB-A-2 053 392**

**ANTRIEBSTECHNIK, vol. 14, no. 5, mai 1975,
pages 273-277, Mainz, DE; L. ERNST et al.:
"Elektrische Antriebe mit stufenlos regelbaren
Wirbelstromkupplungen"**

(73) Titulaire: **RENAULT VEHICULES INDUSTRIELS**
**Société Anonyme dite:**
**129 rue Servient "La Part Dieu"**
**F-69003 Lyon (FR)**

(72) Inventeur: **Sibeud, Jean-Paul**
**Quartier Chaponnay sous Vigne**
**F-69360 Saint Symphorien d'Ozon (FR)**

(74) Mandataire: **Chassagnon, Jean-Alain**
**REGIE NATIONALE DES USINES RENAULT**
**(S.0804)**
**F-92109 Boulogne-Billancourt Cedex (FR)**

Courier Press, Leamington Spa, England.

## Description

L'invention est relative à un embrayage mixte à friction et courants de Foucault, et s'applique notamment aux véhicules automobiles en tant qu'embrayage de démarrage. L'invention peut également être utilisée dans d'autres applications, où une inertie importante doit être mise en rotation à partir d'un arbre en mouvements.

Le problème à résoudre lors du démarrage d'un véhicule est de transmettre un couple entre un arbre moteur en rotation, et un autre arbre lié à une forte inertie, dont la vitesse est nulle en début d'opération et doit devenir égal à celle de l'arbre moteur, dans une première phase de glissement. Lorsque le glissement s'annule, l'embrayage doit être complètement fermé; c'est-à-dire qu'il ne doit plus glisser tant que le couple transmis ne dépasse pas le couple maximum d'une certaine quantité, qui est définie pour chaque type de véhicule.

Le problème à résoudre pour effectuer un changement de rapport de la boîte de vitesses est la coupure de la transmission. Cette coupure de la transmission doit être totale, lorsque l'embrayage est associé à une boîte de vitesses possédant des synchroniseurs. La coupure de la transmission doit être progressive dans le temps pour ne pas exiter les oscillations de torsion de la transmission, dont les éléments élastiques, antérieurement contraint par le couple transmit, libèrent leur énergie potentielle de torsion. Le rétablissement du couple doit être progressif, pour éviter les variations brusques d'accélération du véhicule lors de ces opérations.

Enfin il faut tenir compte de l'énergie dissipée par l'embrayage lors de ces opérations. En effet lors d'un démarrage en palier, l'énergie dissipée par l'embrayage est égale à l'énergie cinétique conférée au véhicule. D'autre part il faut tenir compte, que l'énergie dissipée dans l'embrayage pour un démarrage en côte peut être jusqu'à dix fois plus grande, et l'embrayage doit pouvoir dissiper cette énergie sans détériorations importantes.

Pour résoudre ces problèmes, on utilise couramment soit des embrayages à friction, soit des coupleurs tels que ceux dits à courants de Foucault.

Les embrayages à frictions qui sont utilisés depuis très longtemps sur la majorité des véhicules ont comme avantages bien connus d'avoir un rendement de 1 lorsqu'ils sont fermés, de transmettre aucun couple lorsqu'ils sont ouverts, de pouvoir transmettre de très fort couple avec de faibles dimensions, enfin d'être simples robustes et économiques car ils sont construits suivant une technologie maitrisée depuis de longues années. En revanche ces embrayages à frictions ont pour inconvénients majeurs d'être un organe d'usure, d'être une commande mécanique qui est très mal adaptée aux automatismes actuels, et d'avoir des caractéristiques qui ne sont pas constantes lors de leur utilisation, car elles évoluent avec l'usure de ces embrayages.

Les coupleurs à courants de Foucault sont utilisés depuis longtemps, et existent sous de très nombreuses formes comme celle décrite dans le document DE—A—2920620.

Ce document décrit un système comportant deux éléments associés: un coupleur à courant de Foucault et un embrayage à friction. Ces deux éléments sont constitués d'organes différents.

De ce fait, un éventuel pilotage exciterait les inducteurs des deux éléments par l'intermédiaire de contacts glissants traversés par l'intensité totale de l'excitation.

Les coupleurs à courants de Foucault permettent de transmettre un couple qui est fonction de la vitesse de glissement, et du flux d'excitation (cette dernière caractéristique n'existe pas dans le cas d'un coupleur hydrocinétique). De plus le contrôle du courant d'excitation donc le contrôle du flux d'excitation permet de régler le couple transmis en toutes circonstances par ce type de coupleur. Enfin le glissement donne lieu à une dissipation d'énergie par effet joule, les pièces chauffent mais ne s'usent pas.

En revanche ce type de coupleur à courants de Foucault présente l'inconvénient d'exiger un glissement pour qu'il puisse effectuer une transmission de couple, et de ce fait le rendement est toujours inférieur à 1. Ce type de coupleur qui est l'association d'un machine à dissipation thermique avec une machine électrique, exige pour cette dernière machine électrique des isolants qui doivent être protégés. Ceci entraîne des compromis technologiques et un coût de réalisation plus élevé. De plus l'énergie de contrôle c'est-à-dire l'énergie d'excitation est très élevée, lorsque les entrefers sont importants; et la variation de cette énergie de contrôle ne peut pas être rapide. Enfin l'énergie électrique d'excitation doit être apportée à un système en rotation.

En résumé on peut dire que l'embrayage à friction s'use et n'est pas facilement contrôlable par un automatisme; tandis que le coupleur à courants de Foucault ne s'use pas, mais qu'il glisse toujours un peu, et qu'il faut lui apporter une forte énergie d'excitation sur des éléments en rotation.

Le but de la présente invention est de proposer un embrayage mixte à friction et courants de Foucault, ainsi que son procédé de commande; cet embrayage mixte utilisant le coupleur à courants de Foucault dans les phases de glissement au démarrage du véhicule, à l'ouverture de l'embrayage avant changement de rapport et à la fermeture après changement de rapport de la boîte de vitesses; l'embrayage à friction étant utilisé lorsque l'on désire un glissement nul, et la fermeture est déclenchée lorsque le glissement nul du coupleur à courants de Foucault a été provoqué.

Selon un mode de réalisation de l'invention l'embrayage mixte notamment pour véhicule automobile, comprend un coupleur à courants de Foucault et un embrayage à friction à serrage magnétique, qui sont associés à des moyens de production d'un courant d'excitation, ledit courant d'excitation étant contrôlé par un ensemble de pilotage, afin de faire passer le dispositif d'un état glissant à transmission du couple par voie électrodynamique à un état non glissant à transmission de couple par serrage magnétique de pièces de frottement, pour répondre aux conditions de fonctionnement de la transmission du véhicule.

Selon un mode de réalisation de l'invention les moyens de production du courant d'excitation consistent en un alternateur d'excitation entraîné en rotation par le moteur du véhicule, et en un redresseur de courant.

Selon un mode de réalisation de l'invention l'ensemble de pilotage génère et contrôle le courant d'excitation de l'alternateur d'excitation.

Selon un mode de réalisation de l'invention l'ensemble de pilotage reçoit les informations vitesse d'entrée vitesse de sortie, ouverture et fermeture émis par la commande de boîte de vitesses, et l'information vitesse d'entrée pour le démarrage du véhicule.

Selon un mode de réalisation de l'invention l'ensemble de pilotage contrôle un moyen de coupure de l'alimentation du moteur.

Selon un mode de réalisation de l'invention le coupleur à courant de Foucault et l'embrayage à friction à serrage magnétique sont constitués des mêmes éléments pour former un seul organe.

Selon un mode de réalisation de l'invention l'embrayage mixte comporte un volant moteur solidaire de l'arbre d'entrée, un inducteur du coupleur, un rotor, un ressort diaphragme; ledit ressort diaphragme étant solidaire du volant moteur et portant l'inducteur du coupleur, le rotor étant solidaire en rotation de l'arbre de sortie et pouvant se déplacer sur cette arbre dans le sens axial d'une valeur prédéterminée, jusqu'à venir se plaquer contre le volant moteur; ledit arbre de sortie étant porté dans le volant moteur au moyen d'enroulement. Selon un mode de réalisation de l'invention l'alternateur d'excitation a son induit qui est montée directement sur l'inducteur du coupleur, tandis que son inducteur est porté par un carter.

Selon un mode de réalisation de l'invention le rotor est solidaire de l'arbre de sortie au moyen de cannelures.

Selon un mode de réalisation de l'invention l'inducteur du coupleur comporte une seule bobine d'excitation torroïdale.

Selon un mode de réalisation de l'invention l'inducteur du coupleur comporte six bobines disposés radialement.

Selon un mode de réalisation de l'invention le procédé de commande de l'embrayage mixte consiste en ce que le passage de l'état glissant à l'état non glissant est obtenu par une annulation temporaire du couple produit par le moteur d'entraînement.

Selon un mode de réalisation de l'invention le procédé de commande de l'embrayage mixte consiste en ce que le passage de l'état glissant vers l'état non glissant ne peut se réaliser que lorsque le glissement est nul.

Selon un mode de réalisation de l'invention le procédé de commande de l'embrayage mixte consiste en ce que le coupleur à courant de Foucault est utilisé pour l'état glissant c'est-à-dire au démarrage du véhicule, à l'ouverture de l'embrayage avant changement de rapport de vitesse, et à la fermeture après changement de rapport de vitesse. L'embrayage à friction est utilisé pour l'état non glissant.

Selon un mode de réalisation de l'invention le procédé de commande de l'embrayage mixte consiste en ce qu'il y ait une phase d'amortissement lors de l'ouverture au moyen du coupleur à courants de Foucault.

Selon un mode de réalisation de l'invention, le dispositif comporte deux inducteurs disposés de part et d'autre du rotor, qui est muni d'un système de centrage axial. L'embrayage mixte comporte un volant moteur solidaire de l'arbre d'entrée, un inducteur du coupleur solidaire dudit volant moteur, un rotor, et un ressort diaphragme. Le ressort diaphragme est solidaire du volant moteur, et porte un deuxième inducteur du coupleur. Le rotor est solidaire en rotation par rapport à l'arbre de sortie, et peut se déplacer par rapport audit arbre de sortie dans le sens axial d'une valeur prédéterminée, jusqu'à ce que ledit rotor soit plaqué entre les deux inducteurs. L'arbre de sortie est supporté par les inducteurs, par l'intermédiaire de deux roulements qui sont montés sur deux moyeux. Le rotor est associé à un système de centrage axial par rapport aux inducteurs, lorsqu'il n'y a pas de serrage magnétique.

Selon un mode de réalisation de l'invention, le système de centrage axial comporte deux étriers circulaires, qui coopèrent chacun avec une des collerettes d'extrémité du moyeu du rotor, et la collerette d'extrémité du moyeu correspondant monté sur l'arbre de sortie, ceci afin de répartir également la course du ressort diaphragme entre le rotor et chacun des deux inducteurs.

Selon un mode de réalisation de l'invention, chacune des extrémités du moyeu du rotor, comporte des crabots, qui coopèrent avec des crabots des extrémités des moyeux correspondants montés sur l'arbre de sortie, et avec lequel ils sont solidaires en rotation.

Selon un mode de réalisation de l'invention, les crabots du rotor comportent chacun une rampe d'engagement.

Selon un mode de réalisation de l'invention, l'arbre de sortie est solidaire d'un arbre cannelé creux, au moyen d'un élément élastique, ledit arbre creux s'engageant dans les moyeux des inducteurs au moyen de cannelures.

L'embrayage mixte selon l'invention présente ainsi l'avantage de permettre en régime établi le passage du couple sans glissement; et en régime transitoire l'utilisation du coupleur à courants de Foucault qui n'entraîne aucune usure de l'embrayage.

L'invention sera mieux comprise par l'étude d'un mode de réalisation particulier décrit à titre nullement limitatif et illustré par les dessins annexés, sur lesquels:

la figure 1 représente l'ensemble de l'embrayage mixte selon l'invention;

la figure 2 est une vue représentant un mode de réalisation de l'inducteur du coupleur selon l'invention;

la figure 3 représente le schéma électrique de l'embrayage mixte selon l'invention;

la figure 4 représente les courbes caractéristiques de l'alternateur d'excitation selon l'invention;

la figure 5 représente les courbes caractéristiques de l'alternateur d'excitation;

la figure 6 représente le couple transmis par le coupleur en fonction du courant d'excitation de l'inducteur du coupleur et de la vitesse de glissement;

la figure 7 représente le schéma de l'embrayage;

la figure 8 représente en coupe l'ensemble de l'embrayage mixte selon un autre mode de réalisation de l'invention;

la figure 9A représente en perspective cavalière, un détail relatif débrayée à la figure 8, en position élevée;

la figure 9B représente en perspective cavalière le même détail que la figure 9A, en position embrayée;

la figure 10A représente en coupe un détail relatif à la figure 8 en position débrayée;

la figure 10B représente en coupe le même détail que a figure 10A, en position embrayée;

la figure 11 représente la coupe suivante XI—XI de la figure 8.

Le coupleur à courant de Foucault de l'embrayage mixte à friction selon l'invention est utilisé dans les phases de glissement au demarrage du véhicule, à l'ouverture de l'embrayage avant changement de rapport de la boîte de vitesse, et à la fermeture après changement de rapport.

L'embrayage à friction est utilisé lorsque l'on désire un glissement nul, et la fermeture est déclanchée lorsque le glissement nul du coupleur à courant de Foucault a été provoqué. Ainsi il n'y a jamais usure des parties en contact.

L'embrayage à friction est constitué par le rotor 9 et l'inducteur 4 du coupleur à courants de Foucault, dont le serrage est obtenu par la déformation d'un ressort diaphragme 3, sous l'influence de l'attraction magnétique des pièces polaires, qui est brusquement renforcée par la disparition du glissement et du flux de réaction d'induit que générait ce dernier.

L'énergie d'excitation du coupleur à courants de Foucault, dans les phases de glissement et de serrage de l'embrayage à friction dans les phases sans glissement, est obtenu par un petit alternateur 5, dont l'induit 6 tourne avec le mécanisme d'embrayage, tandis que son inducteur 11 est solidaire des parties fixes du système, c'est-à-dire du carter. Ce petit alternateur 5 d'excitation du coupleur peut lui-même recevoir un courant d'excitation i issu d'un ensemble de pilotage 13, qui peut être un calculateur électronique de pilotage. Un redresseur 8 est intercallé entre l'induit 6 de l'alternateur 5, et l'enroulement d'excitation du coupleur à courants de Foucault, c'est-à-dire de l'inducteur 4 du coupleur.

L'ensemble de pilotage 13, qui peut être un calculateur électronique, complète l'ensemble de l'invention en délivrant un courant de contrôle i d'excitation de l'alternateur 5 d'excitation du coupleur à courants de Foucault. C'est ensemble de pilotage 13 émet un ordre bref de coupure de couple moteur pour permettre la fermeture à glissement nul de l'embrayage à friction.

L'ensemble de pilotage 13 reçoit les informations vitesse d'entrée $V_e$ et vitesse de sortie $V_s$ de l'embrayage, ainsi que les différents ordres d'ouverture et de fermeture émis par la commande de la boîte de vitesse BV. L'ensemble de pilotage 13 reçoit également une information de consigne de vitesse d'entrée $V_{ed}$ pour le démarrage du véhicule.

Examinons maintenant les différentes phases lors du démarrage d'un véhicule. L'ordre d'exécution est émis par l'ensemble de pilotage 13 au moyen d'un calculateur de démarrage d'un modèle connu, et assurant l'adaptation de la vitesse moteur aux conditions du démarrage en cours, qui peut être en palier ou en côte.

L'ensemble de pilotage 13 de l'embrayage envoit un courant i d'excitation à l'alternateur 5 d'excitation du coupleur à courants de Foucault, afin de provoquer la transmission d'un couple permettant d'accélérer le véhicule et de stabiliser la vitesse du moteur à celle définie par le calculateur de démarrage.

L'ensemble de pilotage 13 de l'embrayage mesure en permanence la vitesse d'entrée $V_e$ et la vitesse de sortie $V_s$ de l'embrayage, et calcul le glissement de cet organe par la vitesse de glissement $V_d$ avec $V_d = V_e - V_s$.

Lorsque le glissement du coupleur à courants de Foucault devient inférieur à une valeur préalablement définie, l'ensemble de pilotage 13 provoque une brève coupure du couple moteur, qui par un ralentissement de l'arbre d'entrée 1 de l'embrayage, provoque une annulation du glissement. Le glissement nul entraîne l'annulation des courants de Foucault, et par suite du flux de réaction d'induit qu'ils produisaient. Dans l'entrefer du coupleur à courants de Foucault, le flux total devient égal au flux d'excitation, qui n'est plus réduit par le flux de réaction d'induit.

Ce flux total est alors suffisant pour que l'attraction magnétique qu'il provoque sur les pièces polaires de l'inducteur 4 du coupleur, et sur le rotor 9, les plaque les uns sur les autres en comprimant le ressort diaphragme 3, qui provoque l'entrefer de fonctionnement du coupleur à courants de Foucault.

A partir de ce moment le coupleur à courants de Foucault devient un embrayage à friction dont le serrage est d'origine électromagnétique.

L'annulation de l'entrefer réduit fortement la réluctance des circuits magnétiques, et le courant d'excitation 1 de l'inducteur 4 du coupleur peut être réduit dans de forte proportion sans risque de réouverture de l'embrayage. L'ensemble de pilotage 13 de l'embrayage détecte la fermeture, et provoque la décroissance du courant d'excitation I pour éviter les pertes d'énergie inutiles, le courant de maintien est ajusté en fonction de la vitesse moteur. Cette vitesse moteur est aussi celle de l'alternateur 5 d'excitation, si la caractéristique de l'alternateur le nécessite, une correction d'excitation peut être envisagée en fonction de la vitesse moteur.

Examinons maintenant les différentes phases lors de l'ouverture de l'embrayage pour un changement de rapport de la boîte de vitesses. Il importe d'abord de faire décroître le courant d'excitation I à une valeur fonction de la vitesse moteur, tel que l'on passe du fonctionnement embrayage à friction fermé, au fonctionnement en coupleur à courants de Foucault glissant.

Après ce changement d'état le courant d'excitation sera augmenté afin de permettre la transmission d'un couple permettant l'amortissement des oscillations de décontrainte de la transmission.

L'amortissement de ces oscillations est obtenu dans ce cas par un couple fonction de la vitesse, qui peut être valable quel que soit la torsion antérieure de la transmission. Il faut noter qu'il n'est pas possible d'obtenir cette caractéristique de l'invention lorsque l'opération est exécutée avec un embrayage à friction seul, dont le couple d'amortissement est indépendant de la vitesse d'oscillations.

La phase d'ouverture se termine par l'annulation totale du courant d'excitation I, et par l'annulation de la transmission du couple.

Les différentes phases lors de la fermeture de l'embrayage après un changement de rapport de la boîte de vitesses sont les mêmes que pour le démarrage.

L'embrayage mixte à friction et courants de Foucault selon l'invention permet d'obtenir en un seul ensemble les fonctions de trois organes que l'on trouve isolément dans l'état de la technique, à savoir un coupleur, un embrayage de verrouillage, et un embrayage de coupure. Il faut d'autre part noter que dans l'invention, le coupleur a une caractéristique couple transmis en fonction de la vitesse qui est modulable, et de plus l'embrayage mixte est commandé par un seul ensemble de pilotage.

L'embrayage mixte selon l'invention présente aussi les avantages suivants:

il permet le centrage axial du rotor dans l'entrefer axial des pièces polaires (inducteurs) avec l'imposition d'une cote précise d'entrefer rigoureusement symétrique d'une face par rapport à l'autre;

le maintien de cet entrefer tant que le rotor transmet du couple moteur, qui inhibe l'action de fermeture due à l'attraction magnétique des pièces polaires (inducteurs);

l'effacement total de l'entrefer lorsque le couple moteur s'annule, et que l'attraction magnétique de fermeture subsiste;

le maintien lorsque l'embrayage est en phase de friction à fermeture magnétique, avec un moyeu qui est solidaire de l'arbre de sortie qui n'exerce aucun effort de réouverture quels que soient la valeur ou le sens du couple transmis;

la possibilité d'avoir un élément élastique d'absorption d'énergie qui peut être intercalé entre les moyeux et l'arbre de sortie.

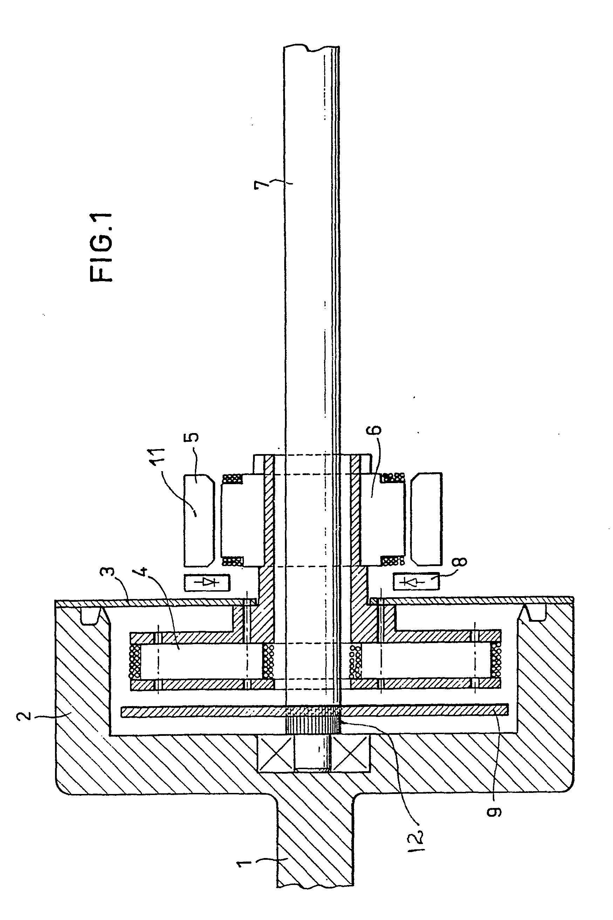

La figure 1 permet de voir l'ensemble de l'embrayage mixte à friction et courants de Foucault selon l'invention. L'arbre d'entrée 1 est l'extrémité du vilebrequin, dans le cas d'un véhicule. Cet arbre d'entrée 1 entraîne en rotation le volant moteur en acier doux 2, le ressort diaphragme en acier 3, l'inducteur 4 du coupleur en acier doux, et les redresseurs 8, le ressort diaphragme 3 est solidaire du volant moteur 2, et il porte en sa partie centrale l'inducteur 4 du coupleur. Le rotor 9 peut coulisser latéralement sur des canelures 12 de l'arbre de sortie 7. Cet arbre de sortie 7 est tenu dans un roulement à billes 10 qui est disposé dans le volant 2. Ainsi le rotor 9 peut coulisser suivant l'axe de l'arbre de sortie 7 jusqu'à venir buter sur le fond du volant moteur 2. Le rotor disque 9 est en acier doux. L'inducteur 11 de l'alternateur d'excitation 5 est solidaire du carter fixe qui reçoit l'ensemble des mécanismes énumérés. L'induit 6 de l'alternateur 5 est solidaire de l'inducteur 4 du coupleur.

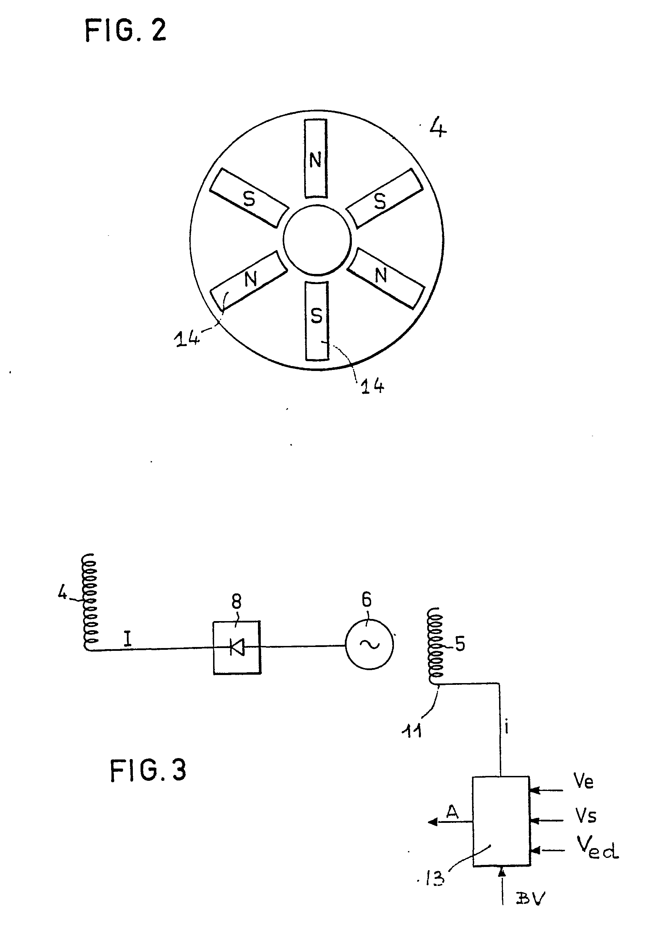

L'inducteur 4 du coupleur peut être réalisé selon la technologie d'une seule bobine d'excitation torroïdale qui est enchassée entre deux pièces d'acier doux permettant de créer un inducteur multipolaire. Dans un autre mode de réalisation l'inducteur 4 du coupleur peut être réalisé comme cela est représenté sur la figure 2 au moyen de six bobines 14 disposées radialement.

L'ensemble de pilotage 13 qui peut être un calculateur électronique permet de piloter les parties électromagnétiques de l'ensemble coupleur-embrayage. Cet ensemble de pilotage 13 reçoit les informations suivantes:

$V_e$ qui est la vitesse d'entrée du système ou vitesse moteur,

$V_s$ qui est la vitesse de sortie du système ou vitesse d'entrée de la boîte de vitesses,

consigne de pilotage du démarrage,

ordre d'ouverture ou de fermeture d'embrayage.

Il faut noter que la consigne de pilotage du démarrage apparaît sous la forme de la consigne $V_{ed}$ qui est la vitesse d'entrée pour le démarrage du véhicule. Il faut noter également que l'ordre d'ouverture et de fermeture de l'embrayage apparaît sur la figure 3 référencé par les lettres BV.

L'ensemble de pilotage 13 contrôle l'excitation i de l'alternateur 5 d'excitation du coupleur à courants de Foucault.

Cet ensemble de pilotage 13 émet en fin de phase de glissement un ordre de coupure A du couple moteur pendant un bref instant. Cet coupure du couple moteur permet d'annuler le glissement dans le coupleur, et de passer en phase de verrouillage d'embrayage à friction avec réduction de la puissance d'excitation.

On va examiner maintenant les différents modes de fonctionnement de l'embrayage mixte à friction et courants de Foucault selon l'invention, c'est-à-dire lorsque l'embrayage est ouvert, lorsque l'on est en phase de couplage par exemple pour le démarrage, et enfin lorsque l'on est en phase d'ouverture avec amortissement des oscillations de torsions de la transmission.

Lorsque l'on veut que l'embrayage mixte soit ouvert, l'ensemble de pilotage 13 reçoit un order d'ouverture, et quelque soit la valeur de la vitesse d'entrée $V_e$ et de la vitesse de sortie $V_s$, l'ensemble de pilotage 13 impose un courant d'excitation I de l'alternateur 5 qui est égal à 0. De ce fait le courant d'excitation I du coupleur à courant de Foucault est également égal à 0. En conséquence le rotor 9 est totalement désolidarisé de l'inducteur 4 du coupleur, du ressort diaphragme 3, du volant moteur 2, et de l'arbre d'entrée 1. Il n'y a plus de couple transmis $C_T$ à l'arbre de sortie 7. L'embrayage mixte selon l'invention assume la fonction de coupure de transmission d'un embrayage classique.

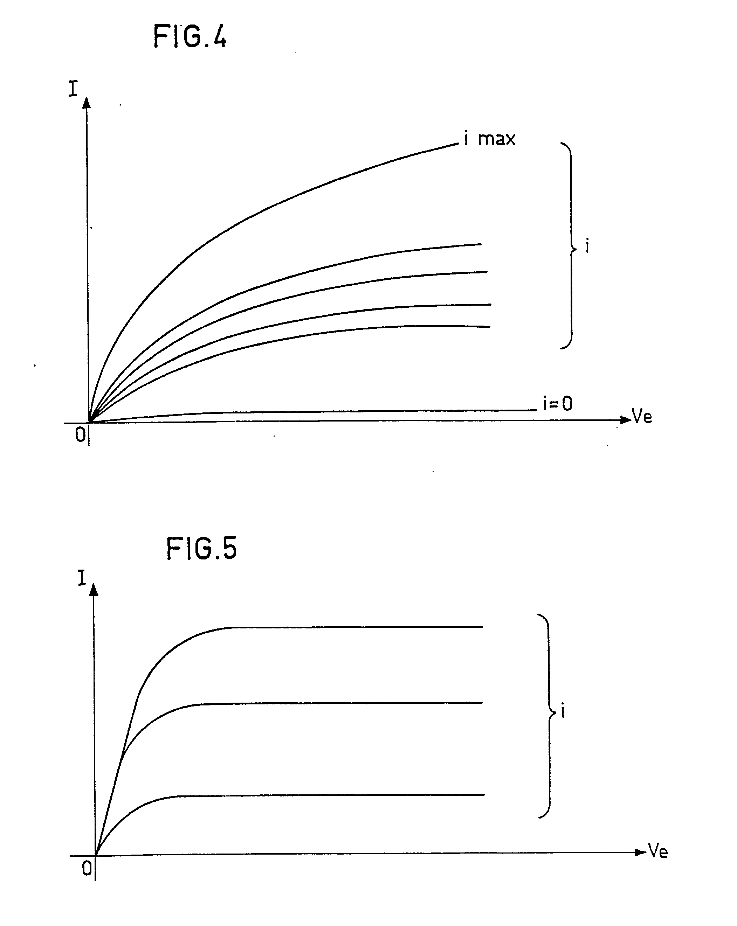

Lorsque l'embrayage mixte selon l'invention doit être en phase de couplage pour le démarrage par exemple, l'ensemble de pilotage 13 reçoit une consigne de démarrage. L'ensemble de pilotage 13 provoque alors l'accroîssement du courant d'excitation i de l'alternateur 5 d'excitation du coupleur. Le courant I d'excitation du coupleur peut alors varier suivant les courbes de la figure 4, ou l'impédance interne de l'alternateur est adaptée à la charge, ou le courant d'excitation I du coupleur peut varier suivant une courbe de la figure 5 ou l'impédance interne de l'alternateur est grande devant la charge. Dans le cas de la figure 4 la dérivé du courant I d'excitation par rapport à la vitesse d'entrée $V_e$ est plus grande que 0 ($dI/dV_e>0$). Dans le cas de la figure 5, la dérivée du courant I d'excitation par rapport à la vitesse d'entrée $V_e$ est égale à 0 ($dI/dV_e=0$). Dans ce dernier cas il faut préciser que cette dérivé est égale à 0 seulement pour la plus grande partie de la variation de la vitesse $V_e$. Il faut noter que la configuration qui permet d'obtenir les courbes de la figure 5 est préférable à la configuration qui permet d'obtenir les courbes de la figure 4 lorsque l'on veut obtenir une variation rapide de l'excitation du coupleur. Cette dernière caractéristique correspond à la caractéristique d'un générateur de courant, et elle est une disposition favorable à une bonne réponse dynamique à un embrayage mixte.

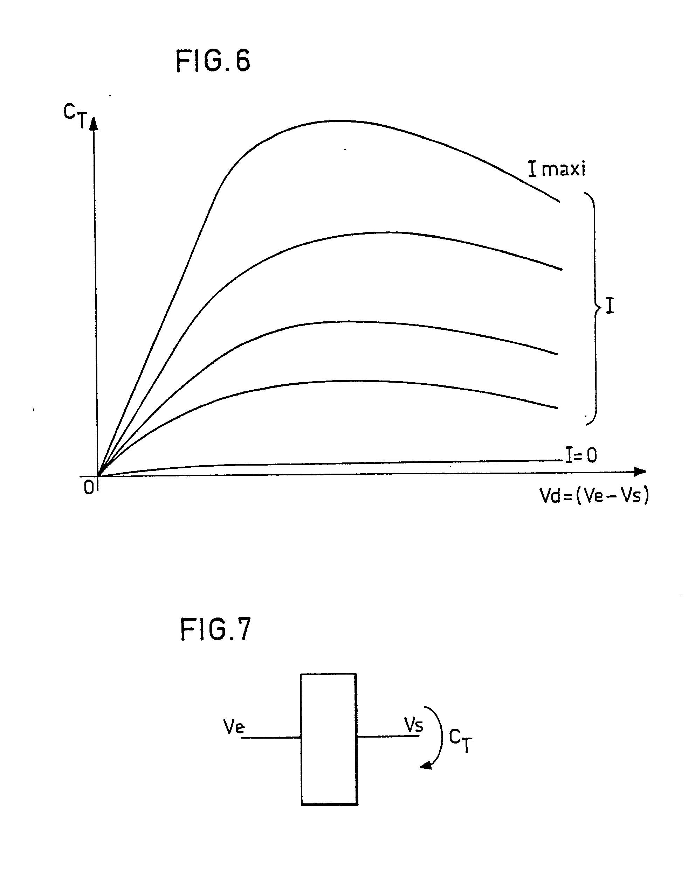

L'induction produite dans l'entrefer par l'inducteur 4 du coupleur, et la rotation relatif du rotor 9, et de l'ensemble volant moteur 2 avec l'inducteur 4, induisent des forces électromotrices dans le métal du rotor 9. Ces forces électromotrices provoquent la circulation de courants de court circuit dans la masse du rotor (courants de Foucault), qui selon la loi de Lenz s'opposent à leurs causes: la vitesse relative des pièces, et l'induction créée par l'inducteur établissent un couple antagoniste au mouvement. Cette caractéristique est illustrée par les courbes de la figure 6 du couple transmis en fonction du glissement $V_d=V_e-V_s$. Une induction de réaction d'induit est créée qui s'oppose à l'induction due à l'inducteur, et qui réduit l'induction totale dans l'entrefer.

De ce fait, tant qu'il y a transmission de couple d'origine électrodynamique, l'induction dans l'entrefer ne peut atteindre une valeur suffisante pour vaincre la raideur du ressort diaphragme 3, qui positionne la valeur initiale de l'entrefer.

Si le fonctionnement qui vient d'être décrit, est poursuivie dans une phase croissante de son courant d'excitation I, le couple transmis $C_T$ pourra être augmenté et la vitesse différentielle entre l'entrée $V_e$ et la sortie $V_s$ du coupleur sera réduite, mais elle ne sera jamais annulée. L'originalité du système réside notamment dans la procédure de passage de la classique phase glissante du coupleur, à une phase embrayée sans glissement.

Lorsque l'ensemble de pilotage 13 a donné le courant i d'excitation maximale à l'inducteur 4 du coupleur, et que la vitesse de glissement $V_d$ devient inférieur à une valeur prédéterminée; l'ensemble de pilotage 13 émet alors un ordre bref de coupure du couple moteur, en supprimant l'alimentation dudit moteur.

Cet ordre de coupure, qui est symbolisée sur la figure 3 par la lettre A, provoque une baisse de la vitesse d'entrée $V_e$, qui lorsque qu'elle devient égale à la vitesse de sortie $V_s$ entraîne l'annulation du couple transmis $C_T$. De ce fait les courants de Foucault sont eux-mêmes annulés et l'induction antagoniste que produisait les courants de Foucault est également annulée. En conséquence, l'induction produite par l'inducteur 4 du coupleur dans l'entrefer, devient suffisante pour vaincre le raideur du ressort diaphragme 3. Il annule alors l'entrefer en plaquant sur le volant moteur 2, le rotor 9 qui glisse sur les canelures 12 de l'arbre 7 et il plaque également l'inducteur 4 du coupleur.

La force magnétomotrice de l'inducteur 4 peut alors être considérablement réduite, tout en conservant un effort de serrage suffisant pour transmettre le couple sans glissement. Ceci est du au fait que l'entrefer diminue dans de très forte proportion, et que le ressort diaphragme 3 peut avoir dans cette zone de fonctionnement à pente négative.

Ainsi, il est possible de concevoir un coupleur dont la puissance d'excitation est grande afin d'obtenir des temps de réponse rapide, et un embrayage sans glissement nécessitant peut d'énergie de maintien en étant fermé.

Examinons maintenant le fonctionnement de l'embrayage mixte selon l'invention, lorsqu'il doit travailler en phase d'ouverture avec amortissement des oscillations de torsion de la transmission. L'ordre d'ouverture est reçu par l'ensemble de pilotage 13, il est représenté par les lettres BV sur la figure 3, et il signifit que cette ordre est reçu par la commande de la boîte de vitesses. Cet ordre d'ouverture BV provoque au moyen de l'ensemble de pilotage 13 l'annulation du courant i d'excitation de l'alternateur 5 d'excitation. Cette annulation du courant i est maintenue jusqu'à ce que la vitesse de sortie $V_s$ soit différente de la vitesse d'entrée $V_e$ qui est obtenu lorsque le ressort diaphragme 3 provoque la séparation de l'inducteur 4 du coupleur et du rotor 9 du volant moteur 2. De ce fait l'entrefer normal du fonctionnement en coupleur se rétablit.

Le courant d'excitation i de l'alternature 5, est alors rétabli à une valeur telle que la caractéristique du coupleur qui est représenté sur la figure 6 ait une pente $dC_T/d(V_e-V_s)$, telle que cette pente corresponde à l'amortissement critique des circuits oscillants de la transmission. Il est ainsi possible quelque soit la torsion antérieure de la transmission, de l'amortir le plus rapidement possible.

Il faut noter que ce résulat d'amortissement est beaucoup plus difficile à obtenir avec un embrayage à friction classique dans lequel $dC_T/d(V_e-V_s)$ tend vers 0. Il s'agit là d'une propriété extrêmement intéressante du système lorsqu'il est utilisé en vue d'effectuer des changements de rapports de boîte de vitesses très rapides, que les oscillations de libérations des contraintes de la transmission perturberaient.

Il faut d'autre part remarquer que le coupleur selon l'invention est autorégulateur par échauffement du rotor 9, dont la perméabilité magnétique décroît avec la température, et qu'elle ne peut en aucun cas dépasser le point de Curie. La résistance interne croît au contraire avec la température, et cette résistance contribue à la réduction du couple transmis $C_T$. Il résulte de ces caractéristiques, qu'il est impossible de détruire ce coupleur en insistant exagérément dans son utilisation. Le verrouillage, du coupleur glissant est impossible, et ceci évite les détériorations et les usures anormales.

On voit sur la figure 7 une représentation schématique de l'embrayage mixte selon l'invention dans lequel on a noter la vitesse d'entrée $V_e$ la vitesse de sortie $V_s$ et le couple à transmettre $C_t$. Il faut également noter que la forme des courbes de la figure 6 dépend du nombre de pôle de l'inducteur 4 du coupleur, et de l'épaisseur et du diamètre du rotor 9 qui est en acier doux.

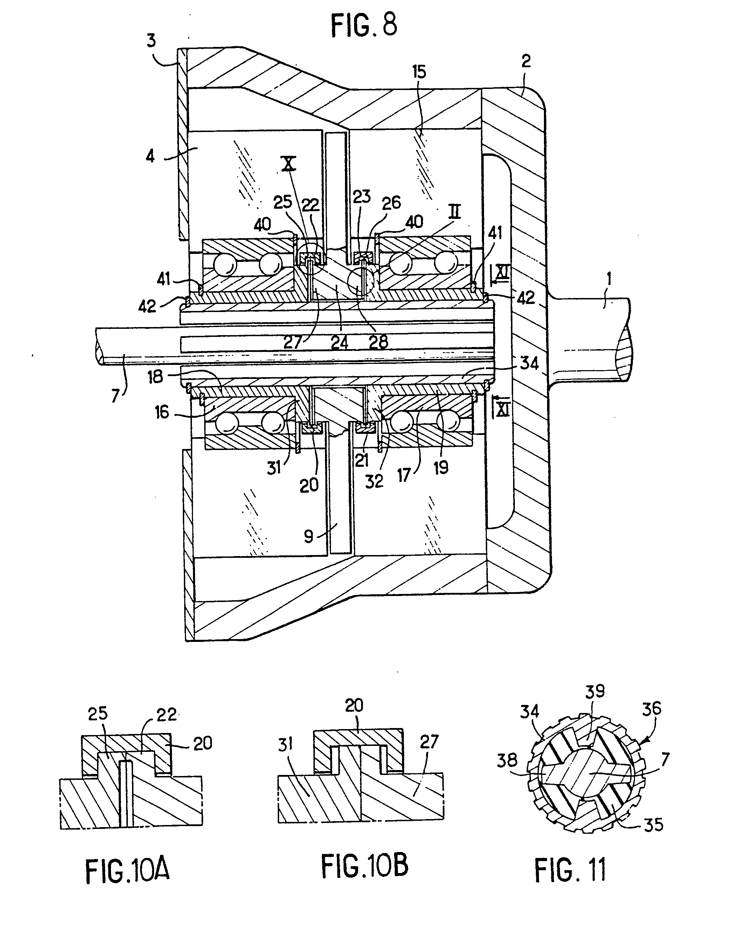

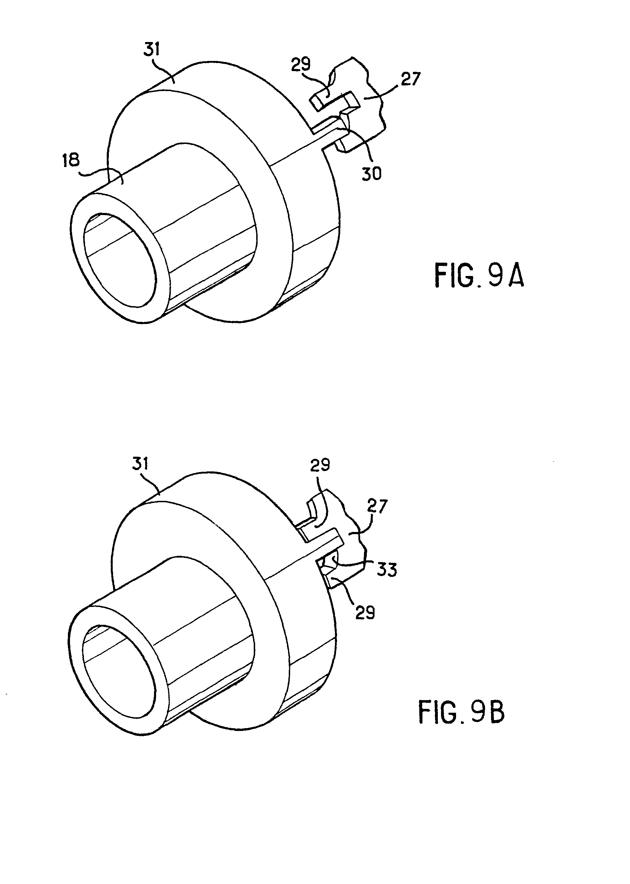

Comme on le voit sur la figure 8, l'arbre d'entrée 1 porte le volant moteur 2. L'inducteur 15 est monté à l'intérieur du volant moteur, et il est solidaire en rotation et en translation avec ledit volant moteur 2. Le volant moteur 2 porte à son extrémité le ressort diaphragme 3, qui est lui-même solidaire en rotation et en translation avec l'inducteur 4. L'ensemble ressort diaphragme 3 et inducteur 4 a ainsi une liberté en translation vers l'inducteur 15, lorsqu'il y a attraction magnétique entre ces pièces. Un rotor 9 est disposé entre les deux inducteurs 4 et 15, et ledit rotor 9 est monté fou sur un arbre cannelé 34. L'arbre cannelé est supporté par deux roulements 16 et 17 qui sont montés respectivement dans chacun des inducteurs 4 et 15. Chacun des roulements 16 et 17 reçoit un moyeu coulissant 18 et 19, qui a des cannelures 37 coopérant avec des cannelures 36 du moyeu 34. Chacun des roulements 16 et 17 est immobilisé en translation par rapport aux inducteurs 4 et 15 au moyen de circlips 40.

Les moyeux coulissants 18 et 19 viennent s'immobiliser en translation par rapport respectivement aux roulements 16 et 17, au moyen de l'extrémité 31 du moyeu coulissant 18, et de l'extrémité 32 du moyeu coulissant 19, et des circlips 41. Les moyeux coulissants 18 et 19, qui peuvent se déplacer en translation par rapport à l'arbre cannelé 34, sont limités dans cette translation par des circlips 42 montés sur l'arbre 34. Le débattement axial de ces moyeux coulissants 18 et 19 est limité dans l'autre sens, par le fait que chacune de leurs extrémités 31 et 32 vient respectivement buter sur les extrémités 27 et 28 du moyeu 24 du rotor 9.

Le système de centrage axial du rotor 9 comporte deux étriers circulaires 20 et 21, qui coopèrent chacun avec des collerettes d'extrémité. L'étrier 20 vient enserrer une collerette d'extrémité 22 appartenant au moyeu 24 du rotor 9, et une collerette d'extrémité 25 du moyeu 18. De la même façon l'étrier circulaire 21 vient enserrer une colerrette d'extrémité 23 du moyeu 24 appartenant au rotor 9, et une colerrette d'extrémité 26 appartenant au moyeu 19.

Les extrémités 27 et 28 du moyeu 24 du rotor 9 sont munies de crabots 29. De la même manière les extrémités 31 et 32 des moyeux coulissants correspondants 18 et 19 sont munis de crabots 30. Ces crabots 30 viennent s'engager dans les crabots 29 du rotor 9. De plus chaque encoche des crabots 29 comporte une rampe d'engagement 33.

La liaison entre l'arbre de sortie 7 et les moyeux coulissants 18 et 19 se fait de la manière suivante. Les roulements 16 et 17 qui sont solidaires respectivement des inducteurs 4 et 15 et dont la position est assurée au moyen des circlips 40 et 41, viennent s'engager dans l'arbre cannelé 34. Ces moyeux coulissants 18 et 19 sont solidaires en rotation de l'arbre cannelé 34 par l'intermédiaire des cannelures 37 des moyeux 18 et 19, et des cannelures 36 de l'arbre cannelé 34. La limite du débattement des moyeux coulissants 18 et 19 est assurée par des circlips 42 montés sur l'arbre cannelé 34. L'arbre de sortie 7 vient se monter à l'intérieur de l'arbre cannelé 34 et la liaison entre ces deux éléments se fait au moyen d'un élément élastique 35. Des languettes extérieures 38 de l'arbre de sortie 7 coopèrent avec l'élément élastique 35, qui reçoit également des languettes intérieures 39 de l'arbre cannelé 34. Ainsi l'arbre de sortie 7 est solidaire de l'arbre cannelé 34 tout en permettant une liaison souple.

Le volant moteur 2 et le pôle inducteur 15 sont solidaires en rotation et translation. Le volant moteur 2 et le ressort diaphragme 3 solidarisent en rotation l'inducteur 4, mais lui laisse une liberté de translation du ressort diaphragme 3 vers l'inducteur 15, lorsqu'il y a attraction magnétique entre ces pièces.

En l'absence d'induction magnétique, le ressort diaphragme 3 positionne l'inducteur 4 et l'inducteur 15 avec l'entrefer normal nécessaire au fonctionnement du coupleur à courant de Foucault. Les étriers circulaires 20 et 21, qui sont en deux parties, assurent la répartition égale de l'entrefer des deux côtés du disque du rotor 9, comme cela est représenté sur les figures 10A et 10B.

Les inducteurs 4 et 5 sont liés en translation par les roulements à billes 16 et 17, au moyeu coulissant 18 et 19. Ces moyeux coulissants 18 et 19 peuvent se translater sur l'arbre cannelé 34, qui est muni de butées d'arrêts constituées par des circlips 42. Ces circlips 42 servent de butées dans le sens de l'ouverture de l'entrefer. D'autres butées dans le sens de fermeture de l'entrefer sont constituées par les faces du moyeu 24 du rotor 9, qui coopèrent avec les faces des extrémités 31 et 32 des moyeux coulissants 18 et 19. Le rotor 9 est libre en rotation par rapport à l'arbre cannelé 34. Ces butées assurent la transmission du couple moteur par des contacts positifs entre les crabots 29 et 30 qui appartiennent respectivement au rotor 9, et au moyeu coulissant 18 et 19. Ces butées assurent aussi dans le fonctionnement en coupleur un entrefer précis et symétrique. La figure 9A montre le fonctionnement avec entrefer, et la figure 9B indique le fonctionnement sans entrefer.

Les crabots 30 des extrémités 31 et 32 des moyeux 18 et 19 sont entraînés positivement par les crabots 29 du moyeu fou 24 du rotor 9, qui reçoit le couple moteur par voie électrodynamique.

Les rampes d'engagements 33 sont telles que l'effort de serrage électromagnétique dû à l'induction entre les inducteurs 4 et 15 ne puisse pas tendre à refermer l'entrefer tant qu'il y a un couple moteur transmis par voie électrodynamique. Quelle que soit l'induction provoquée par l'excitation du coupleur, il y a une relation constante entre le couple et l'attraction jusqu'à ce que la vitesse différentielle entre le rotor 9 et les inducteurs 4 et 15 deviennent très faible.

Par contre si le couple moteur transmis s'annule ou change de signe, les crabots 30 des extrémités 31 et 32 des moyeux coulissants 18 et 19 vont aller en butée sur les dents 29, et les forces d'attraction électromagnétique entre les inducteurs 4 et 15 vont positionner l'accouplement dans la configuration. Dans cette configuration représentée sur la figure 9B, on passe à la phase embrayage à friction à serrage électromagnétique entre les inducteurs 4 et 15 et le rotor 9.

Dans la configuration représentée sur la figure 9B les crabots 30 de l'extrémité 31 du moyeu coulissant 18 sont emprisonnés dans les encoches des crabots 29 de l'extrémité 27 du rotor 9. Les couples qui sont appliqués ne peuvent plus avoir d'effet provoquant un déplacement axial des moyeux coulissants 18 et 19.

Si l'induction est annulée, le ressort diaphragme 3 replacera les moyeux coulissants 18 et 19 en position entrefer ouvert.

Le couple XI—XI de la figure 8 qui est représentée sur la figure 11 montre la liaison entre l'arbre cannelé 34 et l'arbre de sortie 7.

Dans le mode de réalisation représenté sur les figures, on peut remarquer q'uil peut être avantageux d'avoir des inducteurs 4 et 15 symétriques. Le rotor 9 peut être soit un disque plein en acier doux, soit un disque en acier doux incorporant des rayons reliés en deux cercles concentriques en un métal bon conducteur pour constituer une cage d'écureuil analogue à celle d'un moteur asynchrone à induit plat.

**Revendications**

1. Procédé de commande d'un embrayage mixte pour véhicule automobile, ledit embrayage comprenant un coupleur à courants de Foucault, un embrayage à friction à serrage magnétique, des moyens de production d'un courant d'excitation (I) et un ensemble de pilotage (13) pour commander ledit courant d'excitation suivant les conditions de fonctionnement de la transmission du véhicule, procédé caractérisé en ce que le coupleur à courants de Foucault et l'embrayage à friction à serrage magnétique étant constitués des mêmes éléments rotor (9) et inducteur (4) pour former un seul organe, l'ensemble de pilotage (13) commande le courant d'excitation (I) de façon que:

a) pendant l'état glissant à transmission du couple par voie électrodynamique dudit embrayage, ledit courant d'excitation crée un premier flux magnétique dans l'entrefer de l'inducteur (4) et du rotor (9),

b) pendant l'état non glissant à transmission du couple par serrage magnétique de pièces de frottement dudit embrayage, ledit courant d'excitation crée un deuxième flux magnétique dans l'ensemble du circuit magnétique de l'inducteur (4) et du rotor (9), ledit entrefer étant disparu,

c) la transmission du couple soit annulée temporairement pour faire passer ledit embrayage mixte de l'état glissant à l'état non glissant.

2. Embrayage mixte pour véhicule automobile comprenant un coupleur à courants de Foucault, un embrayage à friction à serrage magnétique, des moyens de production d'un courant d'excitation (I) et un ensemble de pilotage (13) pour commander ledit courant d'excitation suivant les conditions de la transmission du véhicule, caractérisé en ce que, le coupleur à courants de Foucault et l'embrayage à friction à serrage magnétique étant constitués des mêmes éléments rotor (9) et inducteur (4) pour former un seul organe, l'embrayage mixte comporte un volant moteur (2) solidaire de l'arbre d'entrée (1), l'inducteur (4) du coupleur, le rotor (9), un ressort diaphragme (3), ledit ressort diaphragme (3) étant solidaire du volant moteur (2) et portant l'inducteur (4) du coupleur, le rotor (9) étant solidaire en rotation de l'arbre de sortie (7) et pouvant se déplacer sur cet arbre (7) dans le sens axial d'une valeur prédéterminée, jusqu'à venir se plaquer contre le volant moteur (2), ledit arbre de sortie (7) étant porté dans le volant moteur (2) au moyen d'un roulement (10), et que lesdits moyens de production du courant d'excitation consistent en un alternateur (5) d'excitation entraîné en rotation par le moteur du véhicule et en un redresseur de courant (8).

3. Embrayage mixte pour véhicule automobile comprenant un coupleur à courants de Foucault, un embrayage à friction à serrage magnétique, des moyens de production d'un courant d'excitation (I) et un ensemble de pilotage (13) pour commander ledit courant d'excitation suivant les conditions de la transmission du véhicule, caractérisé en ce que, le coupleur à courants de Foucault et l'embrayage à friction à serrage magnétique étant constitués des mêmes éléments rotor (9) et inducteurs (4, 15) pour former un seul organe, l'embrayage mixte comporte un volant moteur (2) solidaire de l'arbre d'entrée (1), un inducteur (15) du coupleur solidaire du volant moteur (2), un rotor (9), un ressort diaphragme (3); ledit ressort diaphragme (3) étant solidaire du volant moteur (2) et portant un deuxième inducteur (4) du coupleur; le rotor (9) étant solidaire en rotation par rapport à l'arbre de sortie (7), et pouvant se déplacer par rapport audit arbre de sortie (7), dans le sens axial d'une valeur prédéterminée, jusqu'à ce que ledit rotor (9) soit, plaqué entre les deux inducteurs (4, 15); ledit arbre de sortie (7) étant supporté par les inducteurs (4, 15) par l'intermédiaire de deux roulements (16) et (17) montés sur deux moyeux coulissants (18) et (19); ledit rotor (9) ayant un système de centrage axial par rapport aux inducteurs (4, 15) pendant la phase de non couplage magnétique et que lesdits moyens de production du courant d'excitation consistent en un alternateur (5) d'excitation entraîné en rotation par le moteur du véhicule et en un redresseur de courant (8).

4. Embrayage mixte selon l'une des revendications 2 ou 3, caractérisé en ce que l'ensemble de pilotage (13) reçoit les informations vitesse d'entrée $V_e$, vitesse de sortie $V_s$ ouverture et fermeture émis par la commande de boîte de vitesse BV, et l'information vitesse d'entrée pour le démarrage du véhicule $V_{ed}$.

5. Embrayage mixte selon la revendication 4, caractérisé en ce que l'ensemble de pilotage (13) contrôle un moyen de coupure A de l'alimentation du moteur.

6. Embrayage mixte selon la revendication 2, caractérisé en ce que l'alternateur (5) d'excitation a son induit (6) qui est monté directement sur l'inducteur (4) du coupleur, tandis que son inducteur (11) est porté par un carter.

7. Embrayage mixte selon la revendication 2, caractérisé en ce que le rotor (9) est solidaire de l'arbre de sortie (7) au moyen de cannelures (12).

8. Embrayage mixte selon la revendication 2, caractérisé en ce que l'inducteur (4) du coupleur comporte une seule bobine d'excitation torroïdale.

9. Embrayage mixte selon la revendication 2, caractérisé en ce que l'inducteur (4) du coupleur comporte six bobines (14) disposées radialement.

10. Procédé de commande de l'embrayage mixte selon la revendication 1, caractérisé en ce que le passage de l'état glissant vers l'état non glissant ne peut se réaliser que lorsque le glissement est nul.

11. Procédé de commande de l'embrayage mixte selon l'une des revendications 1 ou 10, caractérisé en ce que le coupleur à courants de Foucault est utilisé pour l'état glissant c'est-à-dire au démarrage du véhicule, à l'ouverture de l'embrayage avant changement de rapport de vitesse, à la fermeture après changement de rapport de vitesse, l'embrayage à friction est utilisé pour l'état non glissant.

12. Procédé de commande de l'embrayage mixte selon l'une des revendications 1, 10 ou 11, caractérisé en ce qu'il y a une phase d'amortissement lors de l'ouverture au moyen du coupleur à courants de Foucault.

13. Embrayage mixte selon la revendication 3, caractérisé en ce que le système de centrage axial comporte deux étriers circulaires (20) et (21), qui coopèrent chacun avec l'une des collerettes d'extrémité (22) et (23) du moyeu (24) du rotor (9), et la collerette d'extrémité (25) ou (26) du moyen correspondant (18) ou (19), de manière à répartir également la course du ressort diaphragme (3) entre le rotor (9), et chacun des inducteurs (4, 15).

14. Embrayage mixte selon la revendication 3, caractérisé en ce que chacune des extrémités (27) et (28) du moyeu (24) du rotor (9) comporte des crabots (29) qui coopèrent avec des crabots (30) situés sur les extrémités (31) et (32) des moyeux correspondants (18) et (19), qui sont solidaires en rotation de l'arbre de sortie (7).

15. Embrayage mixte selon la revendication 14, caractérisé en ce que les crabots (29) comportent chacun une rampe d'engagement (33).

16. Embrayage mixte selon l'une des revendications 3, 13, 14 ou 15, caractérisé en ce que l'arbre de sortie (7) est solidaire d'un arbre cannelé (34) au moyen d'un élément élastique (35); ledit arbre cannelé (34) s'engageant dans les moyeux (18) et (19) au moyen des cannelures (36) et (37).

**Patentansprüche**

1. Verfahren zur Steuerung einer Verbundkupplung für Kraftfahrzeuge, die eine Wirbelstromkupplung, eine Reibungskupplung mit magnetischer Klemmung, eine Anordnung zur Erzeugung eines Erregerstromes (I) und eine Steueranordnung (13) für die Steuerung des Erregerstroms entsprechend den Betriebsbedingungen der Kraftübertragung des Fahrzeugs aufweist, dadurch gekennzeichnet, daß die Wirbelstromkupplung und die Reibungskupplung mit magnetischer Klemmung aus den gleichen Teilen, nämlich dem Rotor (9) und der Erregerwicklung (4) bestehen, die ein einziges Bauteil bilden, wobei die Steueranordnung (13) den Erregerstrom (I) wie folgt steuert:

a) während des Zustands des Gleitens bei der elektrodynamischen Drehmomentübertragung der Kupplung erzeugt der Erregerstrom einen ersten magnetischen Fluß im Spalt zwischen Erregerwicklung (4) und Rotor (9);

b) während des Zustands des Nichtgleitens bei der Drehmomentübertragung mittels magnetischer Klemmung der Reibteile der Kupplung erzeugt der Erregerstrom einen zweiten magnetischen Fluß in der Anordnung des aus Erregerwicklung (4) und Rotor (9) bestehenden magnetischen Kreises, wobei der Spalt verschwunden ist;

c) die Übertragung des Drehmoments wird zeitweise unterbrochen, um die Verbundkupplung vom Zustand des Gleitens in den Zustand des Nichtgleitens übergehen zu lassen.

2. Verbundkupplung für Kraftfahrzeuge mit einer Wirbelstromkupplung, einer Reibungskupplung mit magnetischer Klemmung, einer Anordnung zur Erzeugung eines Erregerstroms (I) und einer Steueranordnung (13) für die Steuerung des Erregerstroms entsprechend den Betriebsbedingungen der Kraftübertragung des Fahrzeugs, dadurch gekennzeichnet, daß die Wirbelstromkupplung und die Reibungskupplung mit magnetischer Klemmung aus den gleichen Teilen, nämlich dem Rotor (9) und der Erregerwicklung (4) bestehen, die ein einziges Bauteil bilden, wobei die Verbundkupplung ein Schwungrad (2) aufweist, das mit der Eingangswelle (1) fest verbunden ist, eine Kupplungs-Erregerwicklung (4), einen Rotor (9), eine Membranfeder (3), die fest mit dem Schwungrad (2) verbunden ist und die Kupplungs-Erregerwicklung (4) trägt, während der Rotor (9) drehfest mit der Ausgangswelle (7) verbunden ist und auf dieser Welle (7) in Axialrichtung um einen vorgegebenen Wert verschiebbar ist bis er am Schwungrad (2) anliegt, wobei die Ausgangswelle (7) im Schwungrad (2) mittels eines Lagers (10) gelagert ist und daß die Anordnung zur Erzeugung des Erregerstromes aus einem Erreger-Wechselstromgenerator (5) besteht, der vom Kraftfahrzeugmotor in Drehungen versetzt wird, sowie aus einem Stromgleichrichter (8) besteht.

3. Verbundkupplung für Kraftfahrzeuge mit einer Wirbelstromkupplung, einer Reibungskupplung mit magnetischer Klemmung, einer Anordnung zur Erzeugung eines Erregerstroms (I) und einer Steueranordnung (13) für die Steuerung des Erregerstroms entsprechend den Betriebsbedingungen der Kraftübertragung des Fahrzeugs, dadurch gekennzeichnet, daß die Wirbelstromkupplung und die Reibungskupplung mit magnetischer Klemmung aus den gleichen Teilen, nämlich dem Rotor (9) und der Erregerwicklung (4, 15) bestehen, die ein einziges Bauteil bilden, daß sie ein Schwungrad (2) aufweist, das fest mit der Eingangswelle (1) verbunden ist, eine Erregerwicklung (15), die fest mit dem Schwungrad (2) verbunden ist, einen Rotor (9), eine Membranfeder (3), die fest mit dem Schwungrad (2) verbunden ist und eine zweite Kupplungs-Erregerwicklung (4) aufweist; der Rotor (9) ist drehfest bezüglich der Ausgangswelle (7) und kann sich auf der Ausgangswelle (7) in Axialrichtung um einen vorgegebenen Wert verschieben bis der Rotor (9) zwischen den beiden Erregerwicklungen (4, 15) festliegt; die Ausgangswelle (7) wird von den Wicklungen (4, 15) mittels zweier Lager (16 und 17) getragen, die auf zwei gleitenden Naben (18 und 19) angeordnet sind; der Rotor (9) weist eine axiale Zentrieranordnung bezüglich der Wicklungen (4, 15) auf während der Phase, in der keine magnetische Kopplung erfolgt und die Anordnung zur Erzeugung des Erregerstroms besteht aus einem Erreger-Wechselstromgenerator (5), der durch den Kraftfahrzeugmotor in Drehungen versetzt wird und aus einem Stromgleichrichter (8).

4. Verbundkupplung nach einem der Ansprüche 2 oder 3, dadurch gekennzeichnet, daß die Steueranordnung (13) Informationen erhält über die Eingangsgeschwindigkeit (V_e), Ausgangsgeschwindigkeit (V_s) des Öffnens und Schließens von der Steuerung des Getriebes (BV), sowie über die Eingangsgeschwindigkeit während des Startens des Fahrzeugs (V_ed).

5. Verbundkupplung nach Anspruch 4, dadurch gekennzeichnet, daß die Steueranordnung (13) eine Unterbrecheranordnung (A) zur Versorgung des Motors steuert.

6. Verbundkupplung nach Anspruch 2, dadurch gekennzeichnet, daß der Erreger-Wechselstromgenerator (5) einen Läufer (6) aufweist, der direkt auf der Kupplungs-Erregerwicklung (4) angeordnet ist, während seine Erregerwicklung (11) von einem Gehäuse getragen ist.

7. Verbundkupplung nach Anspruch 2, dadurch gekennzeichnet, daß der Rotor (9) mit der Ausgangswelle (7) mittels Rillen (12) verbunden ist.

8. Verbundkupplung nach Anspruch 2, dadurch gekennzeichnet, daß die Kupplungs-Erregerwicklung (4) eine einzige toroidförmige Erregerspule aufweist.

9. Verbundkupplung nach Anspruch 2, dadurch gekennzeichnet, daß die Kupplungs-Erregerwicklung (4) sechs radial angeordnete Spulen (14) aufweist.

10. Verfahren zur Steuerung der Verbundkupplung nach Anspruch 1, dadurch gekennzeichnet, daß der Übergang vom Zustand des Gleitens zum Zustand des Nichtgleitens nur dann erfolgt, wenn kein Gleiten auftritt.

11. Verfahren zur Steuerung der Verbundkupplung nach einem der Ansprüche 1 oder 10, dadurch gekennzeichnet, daß die Wirbelstromkupplung verwendet wird für den Zustand des Gleitens, d.h. während des Anfahrens des Fahrzeugs, während des Öffnens der Kupplung vor dem Gangwechsel, während des Schließens nach dem Gangwechsel und daß die Reibungskupplung verwendet wird für den Zustand des Nichtgleitens.

12. Verfahren zur Steuerung der Verbundkupplung nach einem der Ansprüche 1, 10 oder 11, dadurch gekennzeichnet, daß es eine Dämpfungsphase aufweist während des Öffnens mittels der Wirbelstromkupplung.

13. Verbundkupplung nach Anspruch 3, dadurch gekennzeichnet, daß die Anordnung zur axialen Zentrierung zwei kreisförmige Bügel (20 und 21) aufweist, deren jeder mit einem der Endflansche (22 und 23) der Nabe (24) des Rotors (9) zusammenwirkt sowie mit dem Endflansch (25 oder 26) der entsprechenden Anordnung (18 oder 19), derart, daß der Weg der Membranfeder (3) zwischen dem Rotor (9) und jeder der Erregerwicklungen (4, 15) gleichförmig ist.

14. Verbundkupplung nach Anspruch 3, dadurch gekennzeichnet, daß jedes der Enden (27 und 28) der Nabe (24) des rotors (9) Klauen (29) aufweist, die mit Klauen (30) zusammenwirken, welche an den Enden (31 und 32) der zugehörigen Naben (18 und 19) angeordnet sind, welche drehfest mit der Ausgangswelle (7) verbunden sind.

15. Verbundkupplung nach Anspruch 14, dadurch gekennzeichnet, daß jede Klaue (29) eine Eingriffsschräge (33) aufweist.

16. Verbundkupplung nach einem der Ansprüche 3, 13, 14 oder 15, dadurch gekennzeichnet, daß die Ausgangswelle (7) fest mit einer geriffelten Welle (34) mittels eines elastischen Bauteils (35) verbunden ist; die geriffelte Welle (34) greift in die Naben (18 und 19) mittels Rillen (36 und 37) ein.

**Claims**

1. A process for controlling a hybrid clutch for a motor vehicle, said clutch comprising an eddy current coupling arrangement, a friction clutch with magnetic clamping, means for producing an excitation current (I) and a pilot-control assembly (13) for controlling said excitation current in accordance with the conditions of operation of the transmission of the vehicle, the process being characterised in that the eddy current coupling arrangement and the friction clutch with magnetic clamping being formed by the same components, rotor (9) and induction means (4), to form a single member, the pilot-control assembly (13) controls the excitation current (I) in such a way that:

a) during the slipping state of said clutch with transmission of the torque electrodynamically said excitation current creates a first magnetic flux in the air gap of the induction means (4) and the rotor (9),

b) during the non-slipping state of said clutch with transmission of the torque by magnetic clamping of friction members, said excitation current creates a second magnetic flux in the whole of the magnetic circuit of the induction means (4) and the rotor (9), said air gap having disappeared, and

c) transmission of the torque is temporarily nullified to cause said hybrid clutch to go from the slipping state to the non-slipping state.

2. A hybrid clutch for a motor vehicle comprising an eddy current coupling arrangement, a friction clutch with magnetic clamping, means for producing an excitation current (I) and a pilot-control assembly (13) for controlling said excitation current in accordance with the conditions of the transmission of the vehicle, characterised in that, the eddy current coupling arrangement and the friction clutch with magnetic clamping being formed by the same elements, rotor (9) and induction means (4), to form a single member, the hybrid clutch comprises an engine flywheel (2) which is fixed with respect to the input shaft (1), the induction means (4) of the coupling arrangement, the rotor (9), a diaphragm spring (3), said diaphragm spring (3) being fixed with respect to the engine flywheel (2) and bearing the induction means (4) of the coupling arrangement, the rotor (9) being fixed in respect of rotary movement with respect to the output shaft (7) and being capable of displacement on said shaft (7) in the axial direction by a predetermined distance until it comes to bear against the engine flywheel (2), said output shaft (7) being carried in the engine flywheel (2) by means of a rolling bearing (10), and that said means for producing the excitation current comprise an excitation alternator (5) which is driven in rotation by the engine of the vehicle, and a current rectifier (8).

3. A hybrid clutch for a motor vehicle comprising an eddy current coupling arrangement, a friction clutch with magnetic clamping, means for producing an excitation current (I) and a pilot-control assembly (13) for controlling said excitation current in accordance with the conditions of the transmission of the vehicle characterised in that, the eddy current coupling arrangement and the friction clutch with magnetic clamping being formed by the same elements, rotor (9) and induction means (4, 15) to form a single member, the hybrid clutch comprises an engine flywheel (2) which is fixed with respect to the input shaft (1), an induction means (15) of the coupling arrangement which is fixed with respect to the engine flywheel (2), a rotor (9) and a diaphragm spring (3); said diaphragm spring (3) being fixed with respect to the engine flywheel (2) and carrying a scond induction means (4) of the coupling arrangement; the rotor (9) being fixed in respect of rotary movement with respect to the output shaft (7) and being capable of displacement with respect to said output shaft (7) in the axial direction over a predetermined distance until said rotor (9) is pressed between the two induction means (4, 15); said output shaft (7) being supported by the induction means (4, 15) by way of two rolling bearings (16) and (17) which are mounted on two sliding hubs (18) and (19); said rotor (9) having a system for axial centering with respect to the induction means (4, 5) during the phase not involving magnetic coupling and that said means for producing the excitation current comprise an excitation alternator (5) which is driven in rotation by the engine of the vehicle and a current rectifier (8).

4. A hybrid clutch according to one of claims 2 and 3 characterised in that the pilot-control assembly (13) receives information in respect of input speed $V_e$, output speed $V_s$, opening and closing, emitted by the gearbox control means BV, and information in respect of input speed for starting the vehicle moving $V_{ed}$.

5. A hybrid clutch according to claim 4 characterised in that the pilot-control assembly (13) controls a means A for cutting off the feed to the engine.

6. A hybrid clutch according to claim 2 characterised in that the excitation alternator (5) has its armature (6) mounted directly on the induction means (4) of the coupling arrangement while its induction means (11) is carried by a casing.

7. A hybrid clutch according to claim 2 characterised in that the rotor (9) is fixed with respect to the output shaft (7) by means of splines (12).

8. A hybrid clutch according to claim 2 characterised in that the induction means (4) of the coupling arrangement comprises a single toroidal excitation coil.

9. A hybrid clutch according to claim 2 characterised in that the induction means (4) of the coupling arrangement comprises six radially disposed coils (14).

10. A process for controlling the hybrid clutch according to claim 1 characterised in that the transfer from the slipping state towards the non-slipping state can be effected only when the slip is zero.

11. A process for controlling the hybrid clutch according to one of claims 1 or 10 characterised in that the eddy current coupling arrangement is used for the slipping state, that is to say when starting the vehicle moving, upon opening of the clutch prior to a gear shift, upon closure of the clutch after a gear shift, the friction clutch is used for the non-slipping state.

12. A process for controlling the hybrid clutch according to one of claims 1, 10 or 11 characterised in that there is a damping phase upon opening of the clutch by means of the eddy current coupling arrangement.

13. A hybrid clutch according to claim 3 characterised in that the axial centering system comprises two circular stirrup members (20) and (21) which each co-operate with one of the end collars (22) and (23) on the hub (24) of the rotor (9) and the end collar (25) or (26) on the corresponding hub (18) or (19) in such a way as to distribute equally the travel movement of the diaphragm spring (3) between the rotor (9) and each of the induction means (4, 15).

14. A hybrid clutch according to claim 3 characterised in that each of the ends (27) and (28) of the hub (24) of the rotor (9) comprises dogs (29) which co-operate with dogs (30) disposed on the ends (31) and (32) of the corresponding hubs (18) and (19) which are fixed in respect of rotary movement with respect to the output shaft (7).

15. A hybrid clutch according to claim 14 characterised in that the dogs (29) each comprise an engagement ramp (33).

16. A hybrid clutch according to one of claims 3, 13, 14 and 15 characterised in that the output shaft (7) is fixed with respect to a splined shaft (34) by means of a resilient element (35); said splined shaft (34) engaging into the hubs (18) and (19) by means of the splines (36) and (37).

FIG.1

## FIG. 2

## FIG. 3

FIG.4

FIG.5

## FIG.6

## FIG.7

FIG. 8

FIG.10A

FIG.10B

FIG. 11

FIG. 9 A

FIG. 9 B